# EUROPEAN PATENT APPLICATION

(11) **EP 4 814 055 A1**
(43) Date of publication of application: **30.09.2026**
(21) Application number: 24894582.6
(22) Date of filing: 20.11.2024
(51) Int. Cl.: C08L 55/02, C08L 25/12, C08K 3/22

(54) **RECYCLED RESIN COMPOSITION**

(30) Priority: 21.11.2023 KR 20230162391
(71) Applicant: LG Chem, Ltd., Seoul 07336 (KR)
(72) Inventor: BAE, Seon Hyeong, Daejeon 34122 (KR); YOO, Je Sun, Daejeon 34122 (KR)
(74) Representative: Vossius & Partner Patentanwälte Rechtsanwälte mbB
(86) International application number: PCT/KR2024/018328
(87) International publication number: WO 2025/110690

(57) **Abstract**

The present invention relates to a resin composition containing recycled resin. By using an appropriate amount of an antioxidant, the present invention aims to prevent issues such as low-molecular-weight substances (e.g., gas or oligomers) originating from the recycled resin being accumulated and adhering to injection molded articles during the injection molding process of the resin composition, or mold corrosion caused by mold deposits.

## Description

### Technical Field

### [Cross-Reference to Related Application]

This application claims priority to and the benefit of Korean Patent Application No. 10-2023-0162391 filed in the Korean Intellectual Property Office on November 21, 2023, the entire contents of which are incorporated herein by reference.

### [Technical Field]

The present invention relates to a recycled resin composition.

### Background Art

With the rapid development of advanced materials and devices, an increasing number of new technologies are being developed, and the continuous development of various technological equipment is being achieved. Accordingly, the consumption of electrical and electronic devices has increased, and at the same time, the generated amount of waste electrical and electronic devices continues to rise. Plastics are widely used in electrical and electronic devices due to their low risk and low cost. However, their low compressibility and high elasticity cause them to occupy a large volume during the recycling process, making recycling difficult.

Meanwhile, as global interest in environmental issues grows, regulations to curb carbon dioxide emissions are being strengthened. In particular, with the recent emergence of environmental pollution caused by the increased use of plastics as a critical issue, an increasing number of countries are introducing producer responsibility recycling systems for plastics as part of the global circular economy trend. Additionally, regulations in the manufacturing stage are being tightened, such as mandating the use of recycled resin, especially in the United States. Furthermore, plastic taxes, carbon border taxes, etc. are being introduced. Consequently, efforts to explore diverse recycling strategies for waste plastics and the adoption of bio-based materials are being explored in various ways. Accordingly, manufacturers are required to add a certain minimum content of recycled resin in the production of resin-molded articles and the like. The eco-friendliness grade is assigned based on the content of recycled resin.

However, since recycled resin is a pre-processed material, it includes additives such as colorants, lubricants, and release agents, and its properties are already altered due to high-temperature processing. As the content of recycled resin increases, a deterioration in physical properties compared to conventional resin inevitably occurs. In particular, issues arise in the post-processing stages of resin-molded articles, such as causing mold corrosion or low-molecular-weight substances like residual gas or oligomers adhering to the injection molded articles, making it practically challenging to commercialize the products.

### [Documents of Related Art]

### [Patent Documents]

(Patent Document 0001) CN 110157131 A

### Disclosure

### Technical Problem

The present invention provides a resin composition in which the generation of low-molecular-weight substances, such as gas or oligomers originating from recycled resin is reduced during the injection molding process of a resin composition including recycled resin.

### Technical Solution

(1) The present invention provides a resin composition comprising: a virgin graft copolymer including a conjugated diene-based polymer, an aromatic vinyl-based monomer unit, and a vinyl cyanide-based monomer unit; a virgin non-graft copolymer including an aromatic vinyl-based monomer unit and a vinyl cyanide-based monomer unit; a recycled resin including a conjugated diene-based polymer, an aromatic vinyl-based monomer unit, and a vinyl cyanide-based monomer unit; and an acid scavenger, in which the acid scavenger is included in an amount of 0.015 parts by weight to 0.55 parts by weight based on 100 parts by weight of a total of the virgin graft copolymer, the virgin non-graft copolymer, and the recycled resin.
(2) The present invention provides the resin composition of (1), in which the acid scavenger is an oxide of a group 2 metal element or a zeolite.
(3) The present invention provides the resin composition of any one of (1) or (2), in which the acid scavenger is included in an amount of 0.03 parts by weight to 0.5 parts by weight based on 100 parts by weight of the total of the virgin graft copolymer, the virgin non-graft copolymer, and the recycled resin.
(4) The present invention provides the resin composition of any one of (1) to (3), in which, after 500 continuous injections of the resin composition into a mold where a gas capture hole is formed, a weight of a residue including residual gas or oligomers captured in the gas capture hole is 53.5 mg or less.
(5) The present invention provides the resin composition of any one of (1) to (4), in which the recycled resin is included in an amount of 10 parts by weight to 60 parts by weight based on 100 parts by weight of the total of the virgin graft copolymer, the virgin non-graft copolymer, and the recycled resin.
(6) The present invention provides the resin composition of any one of (1) to (5), in which the recycled resin is included in an amount of 15 parts by weight to 50 parts by weight based on 100 parts by weight of the total of the virgin graft copolymer, the virgin non-graft copolymer, and the recycled resin.
(7) The present invention provides the resin composition of any one of (1) to (6), in which the recycled resin is included in an amount of 15 parts by weight to 40 parts by weight based on 100 parts by weight of the total of the virgin graft copolymer, the virgin non-graft copolymer, and the recycled resin.
(8) The present invention provides the resin composition of any one of (1) to (7), in which the virgin non-graft copolymer is included in an amount of 30 parts by weight to 75 parts by weight based on 100 parts by weight of the total of the virgin graft copolymer, the virgin non-graft copolymer, and the recycled resin.
(9) The present invention provides the resin composition of any one of (1) to (8), in which an impact strength measured in accordance with an ASTM D256 method for a sample with a thickness of 1/4 inch is 18 kg·cm/cm or more.

### Advantageous Effects

In case of the resin composition including recycled resin according to the present invention, the generation of low-molecular-weight substances such as gas or oligomers originating from the recycled resin can be reduced during the injection molding process of the resin composition.

### Mode for Disclosure

Hereinafter, the present invention will be described in more detail to aid understanding. In this case, terms or words used in the specification and the claims should not be interpreted as being limited to a general or dictionary meaning and should be interpreted as a meaning and a concept which conform to the technical spirit of the present invention based on a principle that an inventor can appropriately define a concept of a term in order to describe his/her own invention by the best method.

In the present invention, the term "monomer unit" may refer to a component, structure, or the substance itself derived from a monomer, and as a specific example, may refer to a repeating unit formed within a polymer as a result of the introduced monomer participating in a polymerization reaction during the polymerization of a polymer.

In the present invention, the term "weight average molecular weight" is generally measured by gel permeation chromatography (GPC). For example, a measurement target sample may be dissolved in a tetrahydrofuran (THF) solution and measured as a relative value against a standard sample (standard polystyrene, PS) using gel permeation chromatography (GPC).

The term "composition," as used in the present invention, includes not only the reaction products and decomposition products formed from the materials of the corresponding composition but also mixtures of the materials including the corresponding composition.

In the present invention, the term "average particle diameter" may refer to the arithmetic average particle diameter in the particle size distribution measured by dynamic light scattering (DLS), specifically indicating the scattering intensity average particle diameter. The average particle diameter of the conjugated diene-based polymer may be measured using a Nicomp 380 instrument (product name, manufactured by PSS Nicomp).

### <Resin composition>

The present invention provides a resin composition.

A resin composition, according to an embodiment of the present invention, includes: a virgin graft copolymer including a conjugated diene-based polymer, an aromatic vinyl-based monomer unit, and a vinyl cyanide-based monomer unit; a virgin non-graft copolymer including an aromatic vinyl-based monomer unit and a vinyl cyanide-based monomer unit; a recycled resin including a conjugated diene-based polymer, an aromatic vinyl-based monomer unit, and a vinyl cyanide-based monomer unit; and an acid scavenger, in which the acid scavenger is included in an amount of 0.015 parts by weight to 0.55 parts by weight based on 100 parts by weight of a total of the virgin graft copolymer, the virgin non-graft copolymer, and the recycled resin.

The inventors of the present invention have found that during the injection molding process of a resin composition including recycled resin, issues such as the accumulation of low-molecular-weight substances such as gas or oligomers originating from the recycled resin (hereinafter also referred to as "mold deposits") adhering to the injection molded articles, or mold corrosion caused by the mold deposits, can be resolved by using an appropriate content of an antioxidant. On this basis, the present invention was completed.

According to an embodiment of the present invention, the resin composition may result in a weight of residue, including residual gas or oligomers captured in the gas capture hole, of 53.5 mg or less after 500 continuous injections of the resin composition into a mold where the gas capture hole is formed. As a specific example, the weight may be 50 mg or less, 49.5 mg or less, 49 mg or less, 48.5 mg or less, 48 mg or less, 47.5 mg or less, 47 mg or less, 46.5 mg or less, 46 mg or less, 45.5 mg or less, or 45 mg or less. When the weight of the residue, including the residual gas or oligomers captured in the gas capture hole, satisfies the above range, mold corrosion may not occur.

According to an embodiment of the present invention, the resin composition may have an impact strength of 17.5 kg·cm/cm or more, as measured in accordance with the ASTM D256 method on a 1/4-inch thick sample. As a specific example, the impact strength may be 17.6 kg·cm/cm or more, 17.7 kg·cm/cm or more, 17.8 kg·cm/cm or more, 17.9 kg·cm/cm or more, or 18 kg·cm/cm or more. When the impact strength of the resin composition satisfies the above range, the resin composition including recycled resin may satisfy the impact resistance requirements for use as a molded article.

Hereinafter, each configuration of the resin composition according to an embodiment of the present invention will be described.

### 1. Recycled resin

According to an embodiment of the present invention, the recycled resin is a constituent element included to enable the resin composition to be certified as an eco-friendly product, and is a recycled product that is processed and reused from previously used resin or resin waste. Specifically, the recycled resin may refer to a material obtained by collecting, crushing, washing, separating, and selecting a resin waste, followed by processing for reuse according to its intended application. The form of the recycled resin is not particularly limited.

According to an embodiment of the present invention, the recycled resin may include one or more selected from the group consisting of recycled polyethylene, recycled polypropylene, recycled polyester, recycled polystyrene, recycled polyamide, recycled polycarbonate, recycled diene-based graft polymers, and recycled vinyl-based non-graft polymers.

According to an embodiment of the present invention, the recycled resin may include a conjugated diene-based monomer unit, a vinyl cyanide-based monomer unit, and an aromatic vinyl-based monomer unit. The conjugated diene-based monomer unit may improve the impact resistance of the recycled resin. The vinyl cyanide-based monomer unit may improve the chemical resistance of the recycled resin. Additionally, the aromatic vinyl-based monomer unit may improve the processability of the recycled resin.

According to an embodiment of the present invention, the conjugated diene-based monomer for forming the conjugated diene-based monomer unit included in the recycled resin may be one or more selected from the group consisting of 1,3-butadiene, isoprene, chloroprene, and piperylene, and as a specific example, may be 1,3-butadiene.

According to an embodiment of the present invention, the aromatic vinyl-based monomer for forming the aromatic vinyl-based monomer unit included in the recycled resin may be one or more selected from the group consisting of "α-methyl styrene, α-ethyl styrene, p-methyl styrene, 2,4-dimethyl styrene, styrene, p-fluoro styrene, p-chloro styrene, and p-bromo styrene, and as a specific example, may be styrene.

According to an embodiment of the present invention, the vinyl cyanide-based monomer for forming the vinyl cyanide-based monomer unit included in the recycled resin may be one or more selected from the group consisting of acrylonitrile, methacrylonitrile, (Z)-3-phenyl acrylonitrile, and α-chloro acrylonitrile, and as a specific example, may be acrylonitrile.

According to an embodiment of the present invention, the recycled resin may have an Izod impact strength of 7 kg·cm/cm to 30 kg·cm/cm, as measured in accordance with ASTM D256. Specifically, it may be 7 kg·cm/cm to 25 kg·cm/cm, and more specifically, 10 kg·cm/cm to 20 kg·cm/cm. When the above conditions are satisfied, it is possible to implement a resin composition with minimal mechanical properties while achieving a carbon reduction effect.

According to an embodiment of the present invention, the recycled resin may have a melt flow index of 5 g/10 min to 50 g/10 min, as measured in accordance with ASTM D1238. Specifically, it may be 15 g/10 min to 40 g/10 min, and more specifically, 25 g/10 min to 35 g/10 min. When the above conditions are satisfied, it is possible to implement a resin composition with minimal mechanical properties while achieving a carbon reduction effect.

According to an embodiment of the present invention, the resin composition may include 10 parts by weight to 60 parts by weight of the recycled resin based on 100 parts by weight of the total content of the recycled resin, the virgin graft copolymer, and the virgin non-graft copolymer. Specifically, the recycled resin may be included in an amount of 12 parts by weight or more, 14 parts by weight or more, 16 parts by weight or more, 18 parts by weight or more, or 20 parts by weight or more, and also may be included in an amount of 55 parts by weight or less, 50 parts by weight or less, 45 parts by weight or less, or 40 parts by weight or less. When the above conditions are satisfied, the impact strength and melt flow index of the resin composition may be improved.

### 2. Virgin graft copolymer

According to an embodiment of the present invention, the virgin graft copolymer refers to a graft copolymer that has not been previously used and serves as a constituent element that improves the impact resistance of a thermoplastic resin composition.

According to an embodiment of the present invention, the virgin graft copolymer may be a graft polymer that includes a conjugated diene-based polymer including conjugated diene-based monomer units as a rubber polymer and a shell including aromatic vinyl-based monomer units and vinyl cyanide-based monomer units grafted onto the conjugated diene-based polymer. The shell may include aromatic vinyl-based monomer units and vinyl cyanide-based monomer units that are not grafted onto the conjugated diene-based polymer.

According to an embodiment of the present invention, the conjugated diene-based monomer for forming the conjugated diene-based monomer unit included in the virgin graft copolymer may be one or more selected from the group consisting of 1,3-butadiene, isoprene, chloroprene, and piperylene, and as a specific example, may be 1,3-butadiene.

According to an embodiment of the present invention, the aromatic vinyl-based monomer for forming the aromatic vinyl-based monomer unit included in the virgin graft copolymer may be one or more selected from the group consisting of "α-methyl styrene, α-ethyl styrene, p-methyl styrene, 2,4-dimethyl styrene, styrene, p-fluoro styrene, p-chloro styrene, and p-bromo styrene, and as a specific example, may be styrene.

According to an embodiment of the present invention, the vinyl cyanide-based monomer for forming the vinyl cyanide-based monomer unit included in the virgin graft copolymer may be one or more selected from the group consisting of acrylonitrile, methacrylonitrile, (Z)-3-phenyl acrylonitrile, and α-chloro acrylonitrile, and as a specific example, may be acrylonitrile.

According to an embodiment of the present invention, the content of the conjugated diene-based polymer included in the virgin graft copolymer may be 40 to 80 wt%, preferably 50 to 70 wt%. When the above conditions are satisfied, the impact resistance of the virgin graft copolymer composition may be further improved.

According to an embodiment of the present invention, the content of the aromatic vinyl-based monomer units included in the virgin graft copolymer may be 10 to 50 wt%, preferably 20 to 40 wt%. When the above conditions are satisfied, the processability of the virgin graft copolymer may be further improved.

According to an embodiment of the present invention, the content of the vinyl cyanide-based monomer units included in the virgin graft copolymer may be 1 to 30 wt%, preferably 5 to 25 wt%. When the above conditions are satisfied, the chemical resistance of the virgin graft copolymer composition may be further improved.

According to an embodiment of the present invention, the resin composition may include a single type of virgin graft copolymer or may include different types of virgin graft copolymers. For example, the resin composition may include virgin graft copolymers with different average particle diameters.

According to an embodiment of the present invention, the resin composition may include 15 parts by weight to 40 parts by weight of the virgin graft copolymer, based on 100 parts by weight of the total content of the recycled resin, the virgin graft copolymer, and the virgin non-graft copolymer. Specifically, the virgin graft copolymer may be included in an amount of 16 parts by weight or more, 17 parts by weight or more, 18 parts by weight or more, 19 parts by weight or more, or 20 parts by weight or more, and also may be included in an amount of 38 parts by weight or less, 36 parts by weight or less, 34 parts by weight or less, 32 parts by weight or less, or 30 parts by weight or less. When the above conditions are satisfied, the impact strength and melt flow index of the resin composition may be improved.

### 3. Virgin non-graft copolymer

According to an embodiment of the present invention, a virgin non-graft copolymer is a non-graft copolymer that has not been previously used and serves as a constituent element that improves the tensile strength and processability of the resin composition.

According to an embodiment of the present invention, the virgin non-graft copolymer is a non-grafted copolymer that may include aromatic vinyl-based monomer units and vinyl cyanide-based monomer units.

According to an embodiment of the present invention, the aromatic vinyl-based monomer for forming the aromatic vinyl-based monomer unit included in the virgin non-graft copolymer may be one or more selected from the group consisting of α-methyl styrene, α-ethyl styrene, p-methyl styrene, 2,4-dimethyl styrene, styrene, p-fluoro styrene, p-chloro styrene, and p-bromo styrene, and as a specific example, may be styrene.

According to an embodiment of the present invention, the vinyl cyanide-based monomer for forming the vinyl cyanide-based monomer unit included in the virgin non-graft copolymer may be one or more selected from the group consisting of acrylonitrile, methacrylonitrile, (Z)-3-phenyl acrylonitrile, and α-chloro acrylonitrile, and as a specific example, may be acrylonitrile.

According to an embodiment of the present invention, the content of the aromatic vinyl-based monomer units included in the virgin non-graft copolymer may be 60 to 90 wt%, preferably 65 to 85 wt%. When the above conditions are satisfied, the processability of the virgin graft copolymer may be further improved.

According to an embodiment of the present invention, the content of the vinyl cyanide-based monomer units included in the virgin non-graft copolymer may be 10 to 40 wt%, preferably 15 to 35 wt%. When the above conditions are satisfied, the chemical resistance of the diene-based graft polymer may be further improved.

According to an embodiment of the present invention, the resin composition may include 30 parts by weight to 75 parts by weight of the virgin non-graft copolymer, based on 100 parts by weight of the total content of the recycled resin, the virgin graft copolymer, and the virgin non-graft copolymer. Specifically, the virgin non-graft copolymer may be included in an amount of 32 parts by weight or more, 34 parts by weight or more, 36 parts by weight or more, 38 parts by weight or more, or 40 parts by weight or more. Additionally, it may be included in an amount of 70 parts by weight or less, 65 parts by weight or less, 60 parts by weight or less, 55 parts by weight or less, or 50 parts by weight or less. When the above conditions are satisfied, the impact strength and melt flow index of the resin composition may be improved.

### 4. Acid scavenger

According to an embodiment of the present invention, an acid scavenger may serve to reduce the generation of low-molecular-weight substances, such as gas or oligomers, originating from the recycled resin during the injection molding of the resin composition including the recycled resin.

According to an embodiment of the present invention, the low-molecular-weight substances such as gas or oligomers originating from the recycled resin may include, for example, residual moisture in cases where the resin composition is insufficiently dried, monomers and oligomers remaining in the resin composition that were not used in the polymerization reaction, and gases generated from the resin composition due to thermal decomposition or similar processes during the processing of the resin composition.

According to an embodiment of the present invention, the acid scavenger may be an oxide of a group 2 metal element (Be, Mg, Ca, Sr, Ba, Ra) or a zeolite. Specifically, the acid scavenger may include magnesium oxide (MgO), zeolites, and the like. Preferably, it may include magnesium oxide.

According to an embodiment of the present invention, the acid scavenger, as a specific example, oxides of group 2 metal elements and zeolites, is expected to generate electrical attraction, by the metal substances such as group 2 metal elements or aluminum (Al) included in the oxides of group 2 metal elements and zeolites, to the low-molecular-weight substances such as gas or oligomers originating from the recycled resin generated during the injection molding of the resin composition. Accordingly, during the injection molding of the resin composition including the acid scavenger, it is expected that low-molecular-weight substances such as gas or oligomers originating from the recycled resin may be drawn out of the resin composition due to the electrical attraction.

According to an embodiment of the present invention, the resin composition may include 0.015 parts by weight to 0.55 parts by weight of the acid scavenger, based on 100 parts by weight of the total content of the recycled resin, the virgin graft copolymer, and the virgin non-graft copolymer. Specifically, the acid scavenger may be included in an amount of 0.02 parts by weight or more, 0.03 parts by weight or more, 0.04 parts by weight or more, 0.05 parts by weight or more, 0.06 parts by weight or more, 0.07 parts by weight or more, 0.08 parts by weight or more, 0.09 parts by weight or more, or 0.1 parts by weight or more, and may also be included in an amount of 0.53 parts by weight or less, 0.51 parts by weight or less, 0.48 parts by weight or less, 0.46 parts by weight or less, 0.44 parts by weight or less, 0.42 parts by weight or less, or 0.4 parts by weight or less. When the acid scavenger is included in an amount exceeding the above range, the impact strength of the resin composition may be reduced. Additionally, when the acid scavenger is included in an amount below the above range, the effect of reducing the generation of low-molecular-weight substances such as gas or oligomers originating from the recycled resin may be reduced.

### 5. Additional additives

According to an embodiment of the present invention, the resin composition may further include additional additives. The additives may be one or more selected from the group consisting of lubricants, antioxidants, light stabilizers, hydrolysis stabilizers, release agents, pigments, antistatic agents, conductivity imparting agents, electromagnetic wave shielding agents, magnetism imparting agents, mineral fillers, crosslinking agents, antimicrobial agents, processing aids, metal deactivators, flame retardants, anti-friction and anti-wear agents, and coupling agents.

The additives may be used without limitation as long as they are employed in the technical field of the present invention, and those skilled in the art may select the additives to be included in the present invention according to the intended purpose.

### <Molded article>

The present invention provides a molded article including the resin composition. For example, the molded article may be applied to various industrial fields such as various electrical and electronic products and automotive parts. As for the molding methods, general molding methods such as extrusion, injection molding, and casting may be applied. For instance, in injection molding, a product that attempts to provide a matte molded article by corroding the surface of the mold, the molded article according to the present invention does not require corrosion treatment of the surface of the mold, and it is possible to provide a molded article having a matte and uniform surface in the state of being injection molded, even without post-treatment of the molded article.

Hereinafter, exemplary embodiments of the present invention will be described in detail so that those with ordinary skill in the art to which the present invention pertains may easily carry out the exemplary embodiments. However, the present invention may be implemented in various different ways and is not limited to the embodiments described herein.

### Examples and Comparative Examples

The materials used in the Examples and Comparative Examples are as follows.

**(1) Virgin graft copolymer A**: An ABS graft polymer including a butadiene rubber polymer with a particle diameter of 100 nm and a shell grafted onto the butadiene rubber polymer, the shell including styrene units and acrylonitrile units.
**(2) Virgin graft copolymer B**: An ABS graft polymer including a butadiene rubber polymer with a particle diameter of 300 nm and a shell grafted onto the butadiene rubber polymer, the shell including styrene units and acrylonitrile units.
**(3) Virgin non-graft copolymer**: A styrene/acrylonitrile non-graft polymer including 25 wt% of acrylonitrile units.
**(4) Recycled resin**: A recycled vinyl cyanide compound-conjugated diene compound-aromatic vinyl compound copolymer with an Izod impact strength (kg·cm/cm, 1/4") of 15 kg·cm/cm and a melt flow index (g/10 min) of 11 g/10 min (manufactured by Hanil Green Tech Resin Co., Ltd.) was used.
**(5) Acid scavenger A**: Magnesium oxide (MgO; manufactured by ICL, product name RA-150).
**(5) Acid scavenger B**: Zeolite (manufactured by Aekyung Materials Co., product name APS-30).
**(6) Acid scavenger C**: Titanium oxide (TiO₂; manufactured by Lomon, product name BLR-896).
**(7) Acid scavenger D**: Zinc oxide (ZnO; manufactured by Duksan Pharmaceutical Co., product name ZnO).

The resin compositions were prepared by blending 0.1 parts by weight of a stabilizer and 3 parts by weight of a lubricant with 100 parts by weight of the total content of the virgin graft copolymer, virgin non-graft copolymer, recycled resin, and acid scavenger, as described in Tables 1 and 2 below.

### Experimental Example

The resin compositions prepared in Examples and Comparative Examples above were introduced into an extrusion kneader (MAXX_Leistritz, product name: ZSE27) at a processing temperature of 220 °C, extruded to obtain pellets, dried sufficiently, and then injected at a temperature of 270 °C using an injection molding machine (LG Chem, product name: LGH-100N) to prepare samples, and the mold deposit and properties of the resin compositions were measured for the prepared samples in the following method.

* Mold deposit evaluation: To measure the low-molecular-weight substances, such as residual gas or oligomers, generated during the injection molding process of the injection molded article, a gas capture hole was designed in a mold made for evaluation. The resin compositions prepared in Examples and Comparative Examples above were injected in the same method as described above, and the residue captured in the capture hole was weighed after 500 continuous injections.

Meanwhile, the mold made for the evaluation was specifically designed with an upper and lower injection specimen extraction section centered around the middle, and a gas capture hole installed at the center. This design allows residue generated during the continuous injection process to be directed into the central hole. The gas capture hole was configured with a diameter of 5 cm and a depth of 1.5 cm. Additionally, to minimize gas capture errors, the ejector pin site of the injection molding machine was sealed with a rubber O-ring.

* Izod impact strength: The Izod impact strength was measured on 1/4-inch thick samples in accordance with the ASTM D256 method. In the present invention, an impact strength of 18 kg·cm/cm or more was evaluated as excellent.
* Melt flow index: The melt flow index was measured under conditions of 220 °C/10 kg according to the evaluation method specified in ASTM D1238.

**[Table 1]**

| | | Example | | | | | | | |
|---|---|---|---|---|---|---|---|---|---|
| | | 1 | 2 | 3 | 4 | 5 | 6 | 7 | 8 |
| Virgin graft copolymer | A (parts by weight) | 15 | 15 | 15 | 15 | - | 15 | 15 | 15 |
| | B (parts by weight) | 15 | 15 | 15 | 15 | 30 | 14 | 8 | 15 |
| Virgin non-graft copolymer (parts by weight) | | 50 | 50 | 50 | 50 | 50 | 53 | 27 | 50 |
| recycled resin (parts by weight) | | 20 | 20 | 20 | 20 | 20 | 15 | 50 | 20 |
| Lubricant (parts by weight) | | 3 | 3 | 3 | 3 | 3 | 3 | 3 | 3 |
| Stabilizer (parts by weight) | | 0.1 | 0.1 | 0.1 | 0.1 | 0.1 | 0.1 | 0.1 | 0.1 |
| Acid scavenger | A (parts by weight) | 0.03 | 0.1 | 0.25 | 0.5 | 0.25 | 0.25 | 0.25 | - |
| | B (parts by weight) | - | - | - | - | - | - | - | 0.25 |
| Mold deposit (mg) | | 53.3 | 45 | 36.3 | 30.3 | 37.5 | 34.6 | 46.8 | 46.4 |
| Impact strength (1/4") | | 22 | 21 | 20 | 19 | 25 | 21 | 19 | 20 |
| Melt flow index (g/10 min) | | 25 | 23 | 21 | 17 | 25 | 20 | 15 | 23 |

**[Table 2]**

| | | Comparative Example | | | | | |
|---|---|---|---|---|---|---|---|
| | | 1 | 2 | 3 | 4 | 5 | 6 |
| Virgin graft copolymer | A (parts by weight) | 15 | 15 | 15 | 15 | 15 | 15 |
| | B (parts by weight) | 15 | 15 | 15 | 15 | 15 | 15 |
| Virgin non-graft copolymer (parts by weight) | | 70 | 50 | 50 | 50 | 50 | 50 |
| Recycled resin (parts by weight) | | - | 20 | 20 | 20 | 20 | 20 |
| Lubricant (parts by weight) | | 3 | 3 | 3 | 3 | 3 | 3 |
| Stabilizer (parts by weight) | | 0.1 | 0.1 | 0.1 | 0.1 | 0.1 | 0.1 |
| Acid scavenger (parts by weight) | A (parts by weight) | - | - | 0.6 | 0.015 | - | - |
| | B (parts by weight) | - | - | - | - | - | - |
| | C (parts by weight) | - | - | - | - | 0.25 | - |
| | D (parts by weight) | - | - | - | - | - | 0.25 |
| Mold deposit (mg) | | 53.8 | 58.5 | 29.1 | 56.9 | 55.3 | 55.9 |
| Impact strength (1/4``) | | 19 | 22 | 16 | 22 | 20 | 21 |
| Melt flow index (g/10 min) | | 28 | 25 | 15 | 25 | 22 | 22 |

With reference to Tables 1 and 2, in case of Examples 1 to 8, where 0.015 parts by weight to 0.55 parts by weight of the acid scavenger were included based on 100 parts by weight of the total of the virgin graft copolymer, virgin non-graft copolymer, and recycled resin, it was confirmed that, compared to Comparative Example 2 which includes the recycled resin but does not include the acid scavenger, the mold deposit value is reduced while satisfying excellent impact strength and melt flow index.

Additionally, it was confirmed that the resin compositions of Examples 1 to 8 had mold deposit values at a similar level to, or lower than, those of Comparative Example 1, which does not include recycled resin.

In case of Comparative Example 3, which includes the acid scavenger in an amount exceeding 0.55 parts by weight, it was confirmed that it did not meet the excellent impact strength compared to Examples 1 to 7.

In case of Comparative Example 4, which includes the acid scavenger in an amount less than 0.15 parts by weight, it was confirmed that the mold deposit value was not reduced compared to Examples 1 to 7.

In case of Comparative Example 5, where a titanium-based oxide was used as the acid scavenger, it was confirmed that the mold deposit value was not reduced compared to Examples 1 to 7, which used oxides of group 2 metal elements or zeolites as the acid scavenger.

In case of Comparative Example 6, where a zinc-based oxide was used as the acid scavenger, it was confirmed that the mold deposit value was not reduced compared to Examples 1 to 7, which used oxides of group 2 metal elements or zeolites as the acid scavenger.

## Claims

1. A resin composition comprising:
a virgin graft copolymer including a conjugated diene-based polymer, an aromatic vinyl-based monomer unit, and a vinyl cyanide-based monomer unit;
a virgin non-graft copolymer including an aromatic vinyl-based monomer unit and a vinyl cyanide-based monomer unit;
a recycled resin including a conjugated diene-based polymer, an aromatic vinyl-based monomer unit, and a vinyl cyanide-based monomer unit; and
an acid scavenger,
wherein the acid scavenger is included in an amount of 0.015 parts by weight to 0.55 parts by weight based on 100 parts by weight of a total of the virgin graft copolymer, the virgin non-graft copolymer, and the recycled resin.

2. The resin composition of claim 1, wherein the acid scavenger is an oxide of a group 2 metal element or a zeolite.

3. The resin composition of claim 1, wherein the acid scavenger is included in an amount of 0.03 parts by weight to 0.5 parts by weight based on 100 parts by weight of the total of the virgin graft copolymer, the virgin non-graft copolymer, and the recycled resin.

4. The resin composition of claim 1, wherein after 500 continuous injections of the resin composition into a mold where a gas capture hole is formed, a weight of a residue including a residual gas or oligomers captured in the gas capture hole is 53.5 mg or less.

5. The resin composition of claim 1, wherein the recycled resin is included in an amount of 10 parts by weight to 60 parts by weight based on 100 parts by weight of the total of the virgin graft copolymer, the virgin non-graft copolymer, and the recycled resin.

6. The resin composition of claim 1, wherein the recycled resin is included in an amount of 15 parts by weight to 50 parts by weight based on 100 parts by weight of the total of the virgin graft copolymer, the virgin non-graft copolymer, and the recycled resin.

7. The resin composition of claim 1, wherein the recycled resin is included in an amount of 15 parts by weight to 40 parts by weight based on 100 parts by weight of the total of the virgin graft copolymer, the virgin non-graft copolymer, and the recycled resin.

8. The resin composition of claim 1, wherein the virgin non-graft copolymer is included in an amount of 30 parts by weight to 75 parts by weight based on 100 parts by weight of the total of the virgin graft copolymer, the virgin non-graft copolymer, and the recycled resin.

9. The resin composition of claim 1, wherein an impact strength measured in accordance with an ASTM D256 method for a sample with a thickness of 1/4 inch is 18 kg·cm/cm or more.
